Europäisches Patentamt

European Patent Office

Office européen des brevets

(11) Veröffentlichungsnummer: **0 393 594 A2**

## (12) EUROPÄISCHE PATENTANMELDUNG

(21) Anmeldenummer: **90107272.8**

(22) Anmeldetag: **17.04.90**

(51) Int. Cl.5: **F16K 15/20**

(30) Priorität: **17.04.89 DE 8904832 U**

(43) Veröffentlichungstag der Anmeldung:
**24.10.90 Patentblatt 90/43**

(84) Benannte Vertragsstaaten:
**DE ES FR GB GR IT**

(71) Anmelder: **JOHN GMBH**
**Klebingerstrasse 9**
**D-8228 Freilassing(DE)**

(72) Erfinder: **John, Hans** .
**Michael-Pacher-Strasse 7**
**D-8228 Freilassing(DE)**

(74) Vertreter: **Liska, Horst, Dr.**
**Möhlstrasse 22 Postfach 86 08 20**
**D-8000 München 86(DE)**

(54) **Aufblasventil, insbesondere für Aufblasartikel.**

(57) Ein Aufblasventil (1), insbesondere für Aufblasartikel, die mit Gas oder Luft als Füllmedium füllbar sind, mit einem im wesentlichen rotationssymmetrischen Ventilschaft (2), der wenigstens an seinem nach außen weisenden Ende eine Durchlaßöffnung (3) aufweist, einem Verschlußglied (7), das durch die Durchlaßöffnung (3) in den Ventilschaft (2) einführbar ist und diesen dicht verschließt, einer, das Verschlußglied (7) unverlierbar mit dem Ventilschaft (2) beweglich verbindenden Verbindungslasche (6), einer an dem Verschlußglied (7) einstückig angeformten Grifflasche (13), einem im Mittelbereich des Ventilschaftes (2) an dessen Außenseite einstückig angeformten Befestigungsflansch (14), und mit einem am anderen Ende des Ventilschaftes (2) angeordneten Sicherungsventil (18), das in seiner Ruhestellung ein Ausströmen des Füllmediums verhindert und in seiner betätigten Stellung ein Ausströmen des Füllmediums ermöglicht.

Das Aufblasventil (1) weist eine mit diesem unverlierbar verbundene Auslösevorrichtung (14) für das Sicherungsventil (18) auf, wobei die Auslösevorrichtung (14) durch die Durchlaßöffnung (3) in den Ventilschaft (2) einführbar ist und eine wenigstens der Länge des Ventilschaftes (2) entsprechende Längserstreckung aufweist, sowie eine ausreichende Steifigkeit hat, die es ermöglicht, das Sicherungsventil (18) aus seiner Ruhestellung in seine betätigte Stellung zu überführen.

EP 0 393 594 A2

Fig. 1

## Aufblasventil, insbesondere für Aufblasartikel

Die Erfindung betrifft ein Aufblasventil, insbesondere für Aufblasartikel, die mit Gas oder Luft als Füllmedium füllbar sind, mit einem im wesentlichen rotationssymmetrischen Ventilschaft, der wenigstens an seinem nach außen weisenden Ende eine Durchlaßöffnung aufweist, einem Verschlußglied, das durch die Durchlaßöffnung in den Ventilschaft einführbar ist und diesen dicht verschließt, einer, einer an dem Verschlußglied einstückig angeformten Grifflasche, einem im Mittelbereich des Ventilschaftes an dessen Außenseite einstückig angeformter Befestigungsflansch, und mit einem im Ventilschaft angeordneten Sicher ungsventil, das in seiner Ruhestellung ein Ausströmen des Füllmediums verhindert und in seiner betätigten Stellung ein Ausströmen des Füllmediums ermöglicht.

Derartige Aufblasventile sind seit vielen Jahren bekannt und werden an den unterschiedlichsten Aufblasartikeln, z.B. Oberarmschwimmflügeln, Rettungswesten, Schlauchbooten etc. eingesetzt.

Dabei besteht das Problem, daß zum Ablassen des Füllmediums das Sicherungsventil mit einer Hand, bspw. durch Zusammenquetschen des Ventilschaftes im Bereich des Sicherheitsventiles betätigt werden muß, so daß für das Herauspressen des Füllmediums aus dem Aufblasartikel nur noch eine Hand zur Verfügung steht. Dies ist bei größeren Artikeln, z.B. bei Schlauchbooten relativ mühsam. Aber auch bei Oberarmschwimmflügeln kann dies für Kinder mit Schwierigkeiten verbunden sein.

Aufgabe der vorliegenden Erfindung ist es daher, das eingangs beschriebene Aufblasventil so zu verbessern, daß beim Ablassen des Füllmediums aus dem Aufblasartikel das Sicher ungsventil nicht von Hand offengehalten werden muß.

Gemäß der vorliegenden Erfindung wird diese Aufgabe dadurch gelöst, daß mit dem Aufblasventil eine Auslösevorrichtung für das Sicherungsventil insbesondere unverlierbar verbunden ist, die in den Ventilschaft einführbar ist, im eingeführten Zustand wenigstens bis zum Sicherungsventil reicht, sowie eine ausreichende Steifigkeit hat, die es ermöglicht, das Sicherungsventil aus seiner Ruhestellung in seine betätigte Stellung zu überführen.

Durch diese Maßnahme ist es zum Ablassen des Füllmediums aus dem Aufblasartikel lediglich erforderlich, das Verschlußglied aus dem Ventilschaft zu ziehen, die Auslösevorrichtung in den Ventilschaft einzuführen und damit das Sicherungs ventil in seine betätigte Stellung zu bringen. Anschließend sind beide Hände frei, so daß sie zum Zusammenpressen des Aufblasartikels zur Verfügung stehen.

Um bei der Verwendung das Aufblasartikels sicherzustellen, daß die Auslösevorrichtung bei Bedarf stets zur Hand ist, ist die Auslösevorrichtung mit dem vorzugsweise seinerseits unverlierbar mit dem Aufblasventil verbundenen Verschlußglied unverlierbar verbunden.

Wenn die Auslösevorrichtung an der Grifflasche befestigt ist, erleichtert dies die Handhabung, da dann auch bei kleineren Aufblasventilen eine ausreichende Greiffläche gegeben ist, ohne daß die Auslösevorrichtung zu große Abmessungen hat, was beim Gebrauch des Aufblasartikels störend sein könnte.

Bei einer bevorzugten Ausführungsform bildet die Auslösevorrichtung mit der Grifflasche eine Einheit, die von dem Verschlußglied radial absteht.

In diesem Fall weist die Auslösevorrichtung mit Vorteil eine gegenüber der Grifflasche wenigstens abschnittsweise verringerte Querschnittsgestalt auf, wodurch das Einführen der Auslösevorrichtung in den Ventilschaft erleichtert ist.

Um ein Festklemmen der Auslösevorrichtung in dem Ventilschaft zu ermöglichen, ist es vorteilhaft, wenn wenigstens dieser aus einem flexiblen und elastischen Material bspw. Kunststoff gebildet ist.

Bei einer anderen Ausführungsform, insbesondere bei größeren Aufblasventilen ist die Anordnung derart getroffen, daß wenigstens die Auslösevorrichtung aus einem flexiblen und elastischen Material bspw. Kunststoff gebildet ist, während der Ventilschaft aus einem gegebenenfalls steiferen Material besteht. In diesem Fall ist die Querabmessung der Auslösevorrichtung bzw. der Grifflasche geringfügig größer als der Innendurchmesser des Ventilschaftes, so daß auch hierbei eine stabile Klemmung des Auslösevorrichtung in dem Ventilschaft gewährleistet ist.

Vor allem kleinere Aufblasventile sind kostengünstig zu fertigen, wenn sie als einstückiges Gußteil aus einem flexiblen und elastischen Material bspw. Kunststoff gebildet sind.

Bei derartigen Aufblasventilen ist es von Vorteil, wenn die Auslösevorrichtung wenigstens abschnittsweise eine Quererstreckung aufweist, die geringfügig größer ist als die innere Querabmessung des Ventilschaftes, so daß die Auslösevorrichtung beim Betätigen des Sicherungsventiles in dem Ventilschaft reibschlüssig oder kraftschlüssig gehalten ist. So ist sichergestellt, daß beim Herauspressen des Füllmediums aus dem Aufblasartikel die Auslösevorrichtung sich nicht von dem Sicherungsventil löst, was zur Folge hätte, daß sich dieses wieder schließen würde.

Um eine zusätzliche sichere Klemmung der Auslösevorrichtung in dem Ventilschaft zu bewirken, ist es vorteilhaft, wenn der Ventilschaft eine sich von der Durchlaßöffnung zu dem Sicherungsventil hin verjüngende Querschnittsgestalt aufweist.

Bei einer anderen Ausführungsform trägt die Auslösevorrichtung wenigstens an ihrem das Sicherungsventil betätigenden Ende Rastmittel, die ein Verrasten der Auslösevorrichtung an dem Sicherungsventil ermöglichen.

Die Rastmittel können bspw.die Form von Winkeln haben, deren Spitzen in Richtung des freien Endes der Auslösevorrichtung weisen.

Da die Möglichkeit besteht, daß beim Herausziehen des Verschlußgliedes dies nicht durch Ziehen an der Grifflasche geschieht, sondern statt dessen an der Auslösevorrichtung gezogen wird, ist es vorteilhaft, wenn die Auslösevorrichtung wenigstens auf einer Seite zumindest über einen Teil ihrer Längserstreckung erhabene Versteifungsmittel aufweist. Damit wird verhindert, daß beim Ziehen an der Auslösevorrichtung diese von der Grifflasche abgerissen wird. Außerdem kann das erhabene Versteifungsmittel eine zusätzliche Aufspreizung des Sicherungsventils bewirken, so daß die Luft schneller aus dem Aufblasventil ausströmen kann.

Um das Einführen der Auslösevorrichtung in den Ventilschaft zu erleichtern, ist bei einer Ausführungsform die Auslösevorrichtung an ihrem das Sicherungsventil betätigenden Ende spitz auslaufend ausgebildet.

Das Sicherheitsventil kann je nach Größe des Aufblasartikels bzw. dem geforderten Innendruck als Lippenventil oder als Rückschlag-Klappenventil ausgebildet sein. Es kommt lediglich darauf an, daß das Ventilglied von seinem Ventilsitz mittels einer von außen in den Ventilschaft einführbaren Auslösevorrichtung wegbewegbar ist.

In der Zeichnung sind zwei unterschiedliche Ausführungsbeispiele des Gegenstandes der Erfindung veranschaulicht. Es zeigen:

Fig. 1 ein Aufblasventil gemäß der Erfindung in einer geschnittenen Seitenansicht, mit aus dem Ventilschaft herausgenommenem Verschlußglied,

Fig. 2 das Aufblasventil gemäß Fig. 1 in einer Draufsicht, mit in den Ventilschaft eingeführtem Verschlußglied,

Fig. 3 ein Aufblasventil gemäß der Erfindung in einer weiteren Ausführungsform, in einer geschnittenen Seitenansicht, mit in den Ventilschaft eingeführtem Verschlußglied, und

Fig. 4 das Aufblasventil gemäß Fig. 3 in einer Draufsicht.

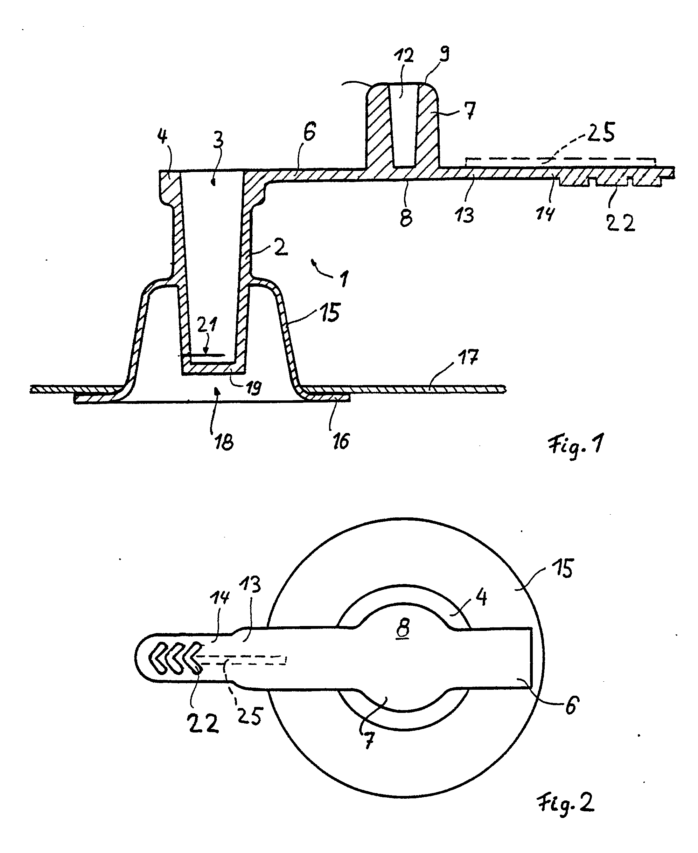

Die Fig. 1 und 2 zeigen ein Aufblasventil 1, das vorzugsweise bei kleineren Aufblasartikeln, z.B. Oberarmschwimmflügeln, Schwimmringen etc. aus PVC oder dergl. zum Einsatz kommt.

Das Aufblasventil 1 ist in einem Stück aus elastischem Kunststoff geformt und hat einem Ventilschaft 2, der an seinem nach außen weisenden Ende eine Durchlaßöffnung 3 aufweist. Ausgehend von der Durchlaßöffnung 3 verringert sich der Innendurchmesser des Ventilschaftes, so daß dieser eine im wesentlichen konische Querschnittsgestalt hat.

Im Bereich der Durchlaßöffnung 3 weist der Ventilschaft 2 an seiner Außenseite einen Ringwulst 4 auf, der das Einblasen von Luft mit dem Mund erleichtert. Außerdem dient der Ringwulst 4 zur Verstärkung des Ventilschaftes 2 in diesem Bereich, an den radial nach außen weisend eine Verbindungslasche 6 angeformt ist, die ein Verschlußglied 7 unverlierbar mit dem Ventilschaft 2 verbindet. Dabei ist das Verschlußglied 7 im Bereich seiner einen Stirnseite 8 radial an die Verbindungslasche 6 angeflanscht, die geringfügig länger ist als das Verschlußglied 7 hoch.

Das Verschlußglied 7 weist eine der Innengestalt des Ventilschaftes 2 entsprechende Form auf, hat jedoch einen geringfügig größeren Durchmesser als dieser, so daß es beim Einführen durch die Durchlaßöffnung 3 in den Ventilschaft 2 darin im Preßsitz gehalten ist und den Ventilschaft 2 dicht verschließt. An seiner anderen Stirnseite 9 hat das Verschlußglied 7 eine abgerundete Außenkante 11 und eine konische Ausnehmung 12, so daß beim Einpressen des Verschlußgliedes 7 das Einführen in den Ventilschaft 2 erleichtert ist weil das Verschlußglied 7 im Durchmesser ein wenig nachgeben kann.

An der Stirnseite 8, der Verbindungslasche 6 gegenüberliegend, ist an dem Verschlußglied 7 eine Grifflasche 13 angeformt.

Die Grifflasche 13 trägt in ihrer radialen Verlängerung von dem Verschlußglied 7 aus gesehen einen langgestreckten schmalen Fortsatz, der als Auslösevorrichtung 14 für ein weiter unten beschriebenes Sicherungsventil dient. Die Auslösevorrichtung 14 ist etwa so lang wie der Ventilschaft 2 und hat eine Querabmessung, die geringer ist als der Innendurchmesser des Ventilschaftes 2.

Im Mittelbereich des Ventilschaftes 2 ist an dessen Außenseite ein Befestigungsflansch 15 angeformt; der den unteren Bereich (in Fig. 1) des Ventilschaftes 2 becherartig übergreift und sich nach unten erweitert. In seinem waagrecht auslaufenden unteren Randbereich 16 ist der Befestigungsflansch 15 in einer entsprechenden Öffnung mit der lediglich angedeuteten Wand 17 eines nicht weiter dargestellten Aufblasartikels verschweißt. Da der Befestigungsflansch 15 verformbar ist, kann der Ventilschaft 2 mit dem eingesteckten Verschlußglied 7 in den becherförmigen Befestigungsflansch 15 hineingedrückt werden, so daß dieser nach oben schnappt und den oberen Bereich des Ventilschaftes 2 umgreift. Auf diese Weise steht das Ventil beim Gebrauch des Aufblasartikels nicht störend nach außen ab, sondern ist in dessen Oberfläche versenkt.

Im Bereich des inneren Endes des Ventilschaftes 2 trägt dieser ein Sicher ungsventil 18, das als Rückschlagventil ausgebil det ist. Dazu hat der Ventilschaft 2 einen Schaftboden 19, der den Ventilschaft 2 an seinem unteren Ende abschließt. Oberhalb des Schaftbodens 19 ist in dem Ventilschaft 2 ein mit 21 bezeichneter querlaufender Schlitz angebracht, so daß der Schaftboden 19 lediglich durch einen schmalen Wandabschnitt mit dem Ventilschaft 2 verbunden ist. In der Ruhestellung des Sicherungsventiles 18 ist der Schlitz 21 verschlossen, bzw. preßt ein im Innern des Aufblasartikels herrschender Überdruck den Schaftboden 19 fest gegen den Ventilschaft 2, so daß ein Entweichen der Luft durch das Sicherungsventil 18 verhindert ist.

Um die Luft aus dem Aufblasartikel entweichen zu lassen, wird die Auslösevorrichtung 14 durch die Durchlaßöffnung 3 in den Ventilschaft 2 eingeführt und der dabei Schaftboden 19 nach unten gedrückt. Dadurch verbreitert sich der Schlitz 21 des Sicherungsventils 18, so daß sich dieses in seiner betätigten Stellung befindet und die Luft aus dem Aufblasartikel ausströmen kann.

Die Grifflasche 13 ist geringfügig breiter als der Innendurchmesser des Ventilschaftes 2 in seinem oberen Randbereich. Die Länge der Auslösevorrichtung 14 ist so bemessen, daß beim Hineinschieben der Auslösevorrichtung 14 in den Ventilschaft 2 die Grifflasche 13 im oberen Randbereich an der Innenwandung des Ventilschaftes 2 unter einer geringfügigen elastischen Verformung im Klemmsitz anliegt. Dadurch wird ein Herausgleiten der Auslösevorrichtung 14 verhindert, wenn die Luft aus dem Ausblasartikel herausgedrückt wird.

Zusätzlich oder anstelle der Verbreiterung der Grifflasche 13 können mit 22 bezeichnete winkelförmige Noppen als Rastmittel an der Oberseite oder an der Unterseite der Auslösevorrichtung 14 angebracht sein, die beim Einführen der Auslösevorrichtung 14 in den Ventilschaft 2 an dem Schlitz 21 verhaken, so daß ein Herausgleiten der Auslösevorrichtung 14 aus dem Sicherungsventil 18 verhindert wird, wenn die Luft aus dem Aufblasartikel herausgedrückt wird.

Weiterhin können die Auslösevorrichtung 14 und die Grifflasche 13 auf einer Seite zumindest über einen Teil ihrer Länge eine gemeinsame erhabene Rippe als Versteifungsmittel 25 aufweisen.

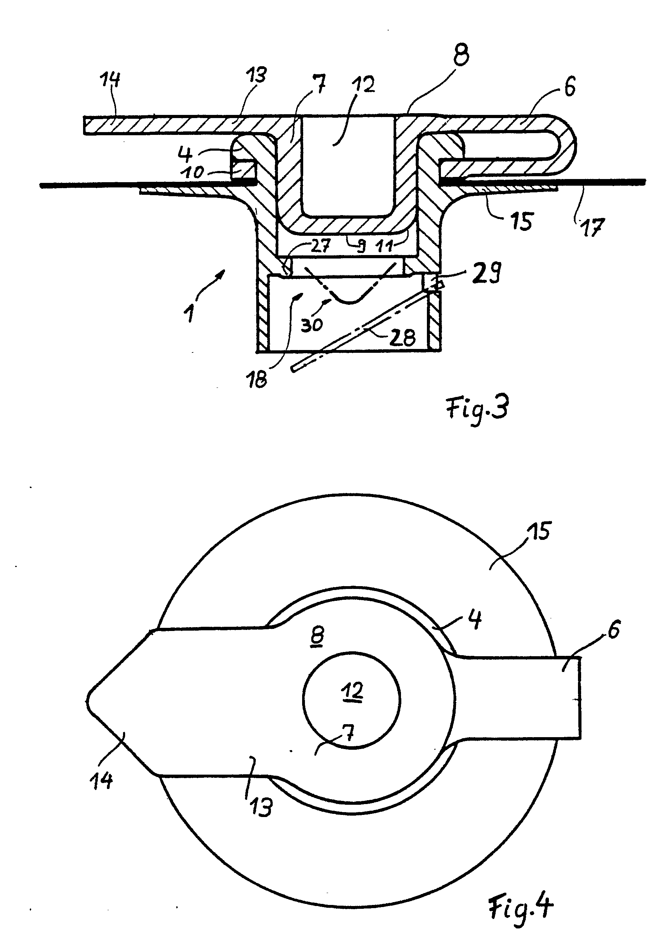

In den Fig. 3 und 4 ist ein Aufblasventil 1 in einer weiteren Ausführungsform veranschaulicht, die insbesondere bei größeren Aufblasartikeln eingesetzt wird. Gleiche Bezugszeichen bezeichnen gleiche Komponenten wie in den Fig. 1 und 2 hin und sind nachstehend nur kurz erläutert.

Dieses Aufblasventil 1 ist mehrstückig aufgebaut, es besteht aus einem hohlzylindrischen Ventilschaft 2 aus nichtelastischem Kunststoff. An seinem nach außen weisenden Ende weist der Ventilschaft 2 eine Durchlaßöffnung 3 auf, an den im oberen Randbereich (Fig. 3) eine radial nach außen weisende Ringschulter 4 einstückig angeformt ist.

In axialem Abstand zu der Ringschulter 4 ist an der Außenseite des Ventilschaftes 2 ein axial nach außen ragender Befestigungsflansch 15 angeformt. Mit diesem Befestigungsflansch 15 ist das Aufblasventil 1 von unten (Fig. 3) durch eine entsprechende Öffnung in der lediglich an gedeuteten Wand 17 eines nicht weiter dargestellten Aufblasartikels geschoben und verschweißt.

Die Verbindungslasche 6 hat einen Befestigungsring 10, mit dem sie zwischen der Ringschulter 4 und dem Befestigungsflansch 15 unverlierbar an dem Ventilschaft 2 gehalten ist. Am anderen Ende der Verbindungslasche 6 ist das Verschlußglied 7 im Bereich seiner einen Stirnseite 8 radial an die Verbindungslasche 6 angeflanscht, die geringfügig länger ist als das Verschlußglied 7 hoch ist.

Das Verschlußglied 7 ist aus elastischem Kunststoff und weist eine der Innengestalt des Ventilschaftes 2 entsprechende Form auf, hat jedoch einen geringfügig größeren Durchmesser als dieser, so daß es beim Einführen durch die Durchlaßöffnung 3 in den Ventilschaft 2 darin im Preßsitz gehalten ist und den Ventilschaft 2 dicht verschließt. An seiner oberen Stirnseite 8 (Fig. 3) hat das Verschlußglied 7 und eine zylindrische Ausnehmung 12, so daß beim Einpressen des Verschlußgliedes 7 das Verschlußglied 7 im Durchmesser ein wenig nachgeben kann. An seiner unteren Stirnseite 9 hat es eine abgerundete Außenkante 11, die das Einführen in den Ventilschaft 2 erleichtert.

An der Stirnseite 8, der Verbindungslasche 6 gegenüberliegend, ist an dem Verschlußglied 7 eine Grifflasche 13 angeformt. Die Grifflasche 13 trägt in ihrer radialen Verlängerung von dem Verschlußglied 7 aus gesehen einen langgestreckten Fortsatz, der als Auslösevorrichtung 14 für ein weiter unten beschriebenes Sicherheitsventil dient. Die Auslösevorrichtung 14 ist etwa so lang wie der Ventilschaft 2 und hat eine Querabmessung, die geringfü gig größer ist, als der Innendurchmesser des Ventilschaftes 2. Da die Auslösevorrichtung 14 aus flexiblem Kunststoff ist, kann sie leicht in den Ventilschaft 2 eingeführt werden und ist in diesem im Klemmsitz sicher gehalten.

Im unteren Bereich des Ventilschaftes 2 trägt dieser ein Sicherungsventil 18, das als Rückschlagventil ausgebildet ist. Dazu hat der Ventilschaft 2 eine nach innen gerichtete Ringschulter, die als Ventilsitz 27 dient. Unterhalb des Ventilsitzes 27 ist eine im wesentlichen steife Ventilklappe 28 angeordnet, die in einem radial zum Umfang des Ventilschaftes 2 verlaufenden Langloch 29 schwenkbar gelagert ist.

In der Ruhestellung des Sicherungsventiles 18 preßt ein im Innern des Aufblasartikels herrschender Überdruck die Ventilklappe 28 fest gegen den Ventilsitz 27, so daß ein Entweichen der Luft durch das Sicherungsventil 18 verhindert ist.

Um die Luft aus dem Aufblasartikel entweichen zu lassen, wird die Auslösevorrichtung 14 durch die Durchlaßöffnung 3 in den Ventilschaft 2 eingeführt und dabei die Ventilklappe 27 nach unten gedrückt. Dies ist strichliert bei 30 angedeutet. In dieser betätigten Stellung des Sicherungsventiles 18 kann die Luft aus dem Aufblasartikel ausströmen.

**Ansprüche**

1. Aufblasventil (1), insbesondere für Aufblasartikel, die mit Gas oder Luft als Füllmedium füllbar sind, mit
- einem im wesentlichen rotationssymmetrischen Ventilschaft (2), der wenigstens an seinem nach außen weisenden Ende eine Durchlaßöffnung (3) aufweist,
- einem Verschlußglied (7), das durch die Durchlaßöffnung (3) in den Ventilschaft (2) einführbar ist und diesen dicht verschließt,
- einer an dem Verschlußglied (7) einstückig angeformten Grifflasche (13),
- einem insbesondere im Mittelbereich des Ventilschaftes (2) an dessen Außenseite einstückig angeformten Befestigungsflansch (15), und mit
- einem im Ventilschaft (2) angeordneten Sicherungs ventil (18), das in seiner Ruhestellung ein Ausströmen des Füllmediums verhindert und in seiner betätigten Stellung ein Ausströmen des Füllmediums ermöglicht,
**dadurch gekennzeichnet, daß**
mit dem Aufblasventil (1) eine Auslösevorrichtung (14) für das Sicherungsventil (18) insbesondere unverlierbar verbunden ist, die durch die Durchlaßöffnung (3) in den Ventilschaft (2) einführbar ist, im eingeführten Zustand bis zum Sicherungsventil (18) reicht sowie eine ausreichende Steifigkeit hat, die es ermöglicht, das Sicherungsventil (18) aus seiner Ruhestellung in seine betätigte Stellung zu überführen.

2. Aufblasventil nach Anspruch 1, dadurch gekennzeichnet, daß die Auslösevorrichtung (14) an dem Verschlußglied (7) gehalten und insbesondere eine Einheit mit dessen Grifflasche (13) bildet.

3. Aufblasventil nach Anspruch 2, dadurch gekennzeichnet, daß die Auslösevorrichtung (14) durch einen gegenüber der Grifflasche (13) wenigstens abschnittsweise verringerten Querschnitt hat.

4. Aufblasventil nach einem der Ansprüche 1 bis 3, dadurch gekennzeichnet, daß es als einstük-

kiges Formteil aus einem flexiblen und elastischen Material, insbesondere Kunststoff, ausgebildet ist.

5. Aufblasventil nach einem der Ansprüche 1 bis 4, dadurch gekennzeichnet, daß die Auslösevorrichtung (14) bzw. die Grifflasche (13) wenigstens abschnittsweise eine Quererstreckung aufweisen, die geringfügig größer ist als die innere Querabmessung des Ventilschaftes (2), so daß die Auslösevorrichtung (14) beim Betätigen des Sicherungsventiles (18) in dem Ventilschaft (2) reibschlüssig oder kraftschlüssig gehalten ist.

6. Aufblasventil nach einem der Ansprüche 1 bis 5, dadurch gekennzeichnet, daß der Ventilschaft (2) eine sich von der Durchlaßöffnung zu dem Sicherungsventil (18) hin verjüngende Querschnittsgestalt aufweist.

7. Aufblasventil nach einem der Ansprüche 1 bis 6, dadurch gekennzeichnet, daß die Auslösevorrichtung (14) wenigstens an ihrem das Sicherungsventil (18) betätigenden Ende Rastmittel (22) trägt, die ein Verrasten der Auslösevorrichtung (14) an dem Sicherungsventil (18) ermöglichen.

8. Aufblasventil nach einem der Ansprüche 1 bis 7, dadurch gekennzeichnet, daß die Rastmittel durch wenigstens eine Querrippe, insbesondere in Form eines Winkels (22) gebildet sind, dessen Spitze in Richtung des freien Endes der Auslösevorrichtung (14) weist.

9. Aufblasventil nach einem der Ansprüche 1 bis 8, dadurch gekennzeichnet, daß die Auslösevorrichtung (14) und die Grifflasche (13) wenigstens auf einer Seite zumindest über einen Teil ihrer Längserstreckung gemeinsame erhabene Versteifungsmittel (25) aufweisen.

10. Aufblasventil nach einem der Ansprüche 1 bis 9, dadurch gekennzeichnet, daß die Auslösevorrichtung (14) an ihrem das Sicherungsventil (18) betätigenden Ende spitz auslaufend ausgebildet ist.

11. Aufblasventil nach einem der Ansprüche 1 bis 10, dadurch gekennzeichnet, daß das Verschlußglied (7) unverlierbar, jedoch beweglich mit dem Aufblasventil (1) verbunden ist, insbesondere über eine Lasche (6) mit dem Ventilschaft (2) verbunden ist.

12. Aufblasventil nach einem der Ansprüche 1 bis 11, dadurch gekennzeichnet, daß das Sicherungsventil (18) als Lippenventil oder Rückschlag-Klappenventil ausgebildet ist.

EP 0 393 594 A2

Fig. 1

Fig. 2

Fig.3

Fig.4